# EUROPEAN PATENT APPLICATION

(11) **EP 3 795 536 A1**
(43) Date of publication of application: **24.03.2021**
(21) Application number: 19804034.7
(22) Date of filing: 14.05.2019
(51) Int. Cl.: B82Y 30/00, B82Y 40/00, C01B 32/15

(54) **METHOD FOR THE PRODUCTION OF CONDUCTIVE MICRO-WIRES BY MEANS OF CARBONISATION FOR THE PRODUCTION OF ELECTRODES**

(30) Priority: 14.05.2018 ES 201800120
(71) Applicant: Santana Ramirez, Alberto Andres, 35229 Las Palmas de Gran Canaria (Las Palmas) (ES)
(72) Inventor: Santana Ramirez, Alberto Andres, 35229 Las Palmas de Gran Canaria (Las Palmas) (ES)
(74) Representative: Pons
(86) International application number: PCT/ES2019/070317
(87) International publication number: WO 2019/219995

(57) **Abstract**

The invention relates to a method for the production of a conductive micro-wire from carbon nanotubes by means of carbonization, and the uses thereof in electro-chemical processes and devices, for example, as electrodes in electrical generators. The invention can be included in the field of manufacturing nanomaterials and carbon nanotubes, as well as electrodes for electro-chemical processes and electrical conductors.

## Description

The invention relates to a method for the manufacture of a conductive micro-wire from carbon nanotubes by means of carbon fibre carbonisation and the uses thereof in electro-chemical processes and devices, for example, as electrodes in electrical generators. Therefore, the invention can be included in the field of manufacturing nanomaterials and carbon nanotubes, as well as electrodes for electro-chemical processes and electrical conductors.

### STATE OF THE ART

The electrodes present in different electrical generator systems, or galvanic or voltaic cells, have been well described and studied to date. Metals are among the different materials that have been conventionally used, with the use of copper and silver as the main elements and subsequently the so-called graphite electrodes. Both materials have been chosen for their high electrical conductivity. There are various problems, however, in the use of electrodes intended for use in electro-chemical applications, since said electrodes are going to be in contact with a solution.

On the one hand, the drawbacks in the use of graphite electrodes for electro-chemical applications can be summarised by the fact that they are fragile, rigid, heavy, and have a high economic cost, in addition to the fact that they are currently difficult to obtain. On the other hand, the drawbacks of metal electrical conductors can be summarised by the fact that they are also heavy in large and rigid cross sections, in addition to the high economic cost, the Joule effect further being a drawback in the electrical conduction of large current densities that require working with large wire cross sections.

Therefore, a material has not been found that combines the good conductive response in electro-chemical reactions with the suitable physical resistance for manufacturing said materials in solution for electro-chemical reactions.

### DETAILED DESCRIPTION OF THE INVENTION

A method has been found in the present invention for obtaining a conductive micro-wire which comprises carbon nanotube fibres starting from commercial carbon fibres by means of a series of steps that will be described below.

In the present invention, "carbon fibres or the starting material" is understood as a sheet material that comprises
75 % thermosetting polymers configured for reducing electrical conductivity and increasing tensile strength;
carbon fibres, which are a synthetic fibre made up of fine filaments of 5-10 µm in diameter and composed mainly of carbon, and located next to the polymer, thus configured together for increasing the elasticity of the carbon fibre and adhesion to the thermosetting resins or polymers that are used, such that it facilitates the manufacture of any part; and
varnishes located covering the carbon fibres and the polymer and configured for increasing adhesion with the thermosetting resins or polymers, facilitating the manufacture of parts.

The first aspect of the present invention is a method for the manufacture of a conductive micro-wire characterised in that it comprises the following steps
(a) unwinding a carbon fibre, on a winder at a speed of between 16 cm/s and 100 cm/s;
(b) carbonising the coil fibre obtained in step (a) at a temperature of between 1000 °C and 2500 °C for a time between 1 s and 50 s;
(c) weaving the fibres obtained in step (b) using fibreglass when weaving; and
(d) introducing the fibre obtained in step (c) in a microporous polymeric sheath of a thermosetting polymer, preferably polyester, selected from polyethylene terephthalate, polybutylene terephthalate, polytrimethylene terephthalates and ethylene terephthalate.

The advantage of step (b) of the method is that it is a rapid heat treatment at a temperature higher than 1000 °C which removes most of the thermosetting polymer and the external varnish from the filaments of the starting carbon fibre, thereby restructuring the vibration of the carbon atoms due to the high temperature to a better fit therebetween in the form of carbon nanotubes, forming the nanotubes in a unidirectional manner along the longitudinal direction of the micro-wire that is formed, with high electrical properties, exhibiting an average resistivity of 0.001 Ω in the obtained micro-wire, a value that would be much higher if the nanotubes were not ordered due to the gaps between the different disordered nanotubes, which would cause an increase in said resistivity, reducing the conductivity of the micro-wire.

The advantage of step (c) of the method is that it improves the mechanical strength properties of the micro-wire obtained.

The advantage of step (d) is that it prevents direct contact between the carbon nanotube fibres when they are used as electrodes, which would cause a short circuit; however, the micropores of the polymeric sheath would enable the passage of electrolytic aqueous solution which would close the circuit.

In a preferred embodiment of the method of the present invention wherein steps (a) to (d) are carried out continuously. Therefore, the energy saving of the overall method is improved, as well as the speed at which it produces the conductive micro-wire.

In a preferred embodiment of the method of the present invention wherein the carbonisation of step (b) is carried out by means of a device selected between a gas furnace with multiple flames in series and an electric arc furnace.

In another more preferred embodiment, the carbonisation device of step (b) is a gas furnace with multiple flames in series which uses a gas selected from butane, propane and oxyacetylene, and wherein the carbonisation is carried out at a temperature between 2400 °C and 2500 °C and for a time between 1.3 s and 3.5 s. Therefore, energy savings of up to 40% are achieved when obtaining the micro-wire.

In the present invention, a "gas furnace with multiple flames in series" is understood as a conventional flame furnace with the flames in series or in line along the width inside the furnace and which comprises an inlet and an outlet located on opposite sides and configured so that the sheet of unwound starting carbon fibre can enter inside the furnace at one side and exit from the opposite side continuously.

A second aspect of the present invention is a conductive micro-wire characterised in that it comprises
- unidirectional carbon nanotube fibres, with a longitudinal orientation of the long axis of the nanotubes towards the longitudinal direction of the conductive micro-wire;
- residue from the carbonisation of the polymer and the varnish of the starting material, which is located between the sheets, configured for increasing the mechanical strength of the micro-wire;
- fibreglass, located interlaced in the carbon nanotube fibres configured as a fabric binding element and for increasing the mechanical strength of the micro-wire; and
- sheath of a microporous insulating polymer, preferably polyester, selected from polyethylene terephthalate, polybutylene terephthalate, polytrimethylene terephthalates and ethylene terephthalate, located around the carbon nanotubes fibres encapsulating said fibres in a tubular manner.

In the present invention, "carbon nanotube fibres" are understood as the set of carbons with a cylindrical nanostructure, of the multi-wall type formed by both a concentric and coiled arrangement, wherein said nanotubes are arranged in a unidirectional manner along the longitudinal direction of the micro-wire and are formed interlaced with each other, giving rise to fibre of said wire.

In the present invention, "residue from the carbonisation of the polymer and the varnish" are understood as the residue or solid remains obtained by the combustion of the polymers and the varnish present in the starting carbon fibre.

As each carbon nanotube fibre is composed of thousands of said nanotubes, the sum of the surface area of said filaments exceeds that of a common flat graphite electrode, in addition to occupying less space and enabling improved passage of the electrolyte through the filaments in the electro-chemical processes, which favours electronic transfer by considerably increasing the surface area of the electrode with the same space.

A third aspect of the present invention is the use of the micro-wire described above as electrodes or as an electrical conductor, and more preferably as an electrode in electro-chemical primary electrical generators, electrode in chlorination cells, electrode in galvanic cells, electrode in voltaic cells, or electrode for producing metals in electrolytic tanks.

Throughout the description and the claims, the word "comprises" and its variants are not intended to exclude other technical features, additives, components or steps. For those skilled in the art, other objects, advantages and features of the invention may be deduced from both the description and the embodiment of the invention. The following examples and figures are provided by way of illustration and are not intended to limit the present invention.

### DESCRIPTION OF THE FIGURES

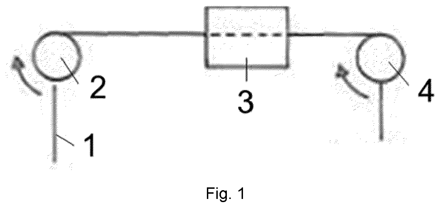

**Figure 1** **shows a diagram of the method for obtaining the micro-wire from carbon nanotube fibres.**

### EXAMPLES

The invention will be illustrated below by means of tests performed by the inventors.

### Example 1

Unidirectional carbon fibre coils (1) with a surface area of 50 cm wide and 100 m long are positioned, located in a winder (2) that unwinds said fibre. The unwound carbon fibres will be pulled from the winders towards a built-in gas furnace with multiple flames in series (3), using butane gas, in the inside thereof at a speed of 16 cm/s inside said furnace. The furnace is at a flame temperature of 2450 °C, each section of the carbon fibres being heated at that temperature for 3 s. In said furnace the fibres enter from the winder and said fibre exits transformed into carbon nanotube fibres directed towards a fibre weaver (4) for weaving fibres, weaving with fibreglass. Once finished, the fabric obtained is introduced into a microporous polymer in the form of a wire.

## Claims

1. A method for the manufacturing of a conductive micro-wire **characterised in that** it comprises the following steps
(a) unwinding a carbon fibre, on a winder at a speed of between 16 cm/s and 100 cm/s;
(b) carbonising the coil fibre obtained in step (a) at a temperature of between 1000 °C and 2500 °C for a time between 1 s and 50 s;
(c) weaving the fibres obtained in step (b) using fibreglass when weaving; and
(d) introducing the fibre obtained in step (c) in a microporous polymeric sheath of a thermosetting polymer, preferably polyester, selected from polyethylene terephthalate, polybutylene terephthalate, polytrimethylene terephthalates and ethylene terephthalate.

2. The method according to claim 1, wherein the steps from (a) to (d) are carried out continuously.

3. The method according to claims 1 or 2, wherein the carbonisation of step (b) is carried out by means of a device selected between a gas furnace with multiples flames in series and an electric arc furnace.

4. The method according to claim 3, wherein the carbonisation device of step (b) is a gas flame furnace that uses a gas selected from butane, propane and oxyacetylene, and wherein the carbonisation is carried out at a temperature between 2400 °C and 2500 °C and for a time between 1.3 s and 3.5 s.

5. A conductive micro-wire obtained by means of the method described in any of claims 1 to 4 and **characterised in that** it comprises:
• unidirectional carbon nanotube fibres, with a longitudinal orientation of the long axis of the nanotubes towards the longitudinal direction of the conductive micro-wire;
• residue from the carbonisation of the polymer and the varnish of the starting material, which is located between the sheets, configured for increasing the mechanical strength of the micro-wire;
• fibreglass, located interlaced in the carbon nanotube fibres configured as a fabric binding element and for increasing the mechanical strength of the micro-wire; and
• sheath of a microporous insulating polymer, preferably polyester, selected from polyethylene terephthalate, polybutylene terephthalate, polytrimethylene terephthalates and ethylene terephthalate, located around the carbon nanotubes fibres encapsulating said fibres in a tubular manner.

6. A use of the conductive micro-wire of claim 5 as an electrode or as an electrical conductor.

7. The use according to claim 6, wherein the electrode is a cathode in electro-chemical primary electrical generators, an electrode in chlorination cells, an electrode in galvanic cells, an electrode in voltaic cells, electrode in voltaic cells or electrode for producing metals in electrolytic tanks.
